Europäisches Patentamt

European Patent Office

Office européen des brevets

(11) Veröffentlichungsnummer: **0 632 115 A2**

## (12) EUROPÄISCHE PATENTANMELDUNG

(21) Anmeldenummer: **94109874.1**

(22) Anmeldetag: **27.06.94**

(51) Int. Cl.6: **C09D 167/06**, C09D 5/34, C08G 63/676, C08G 63/58

(30) Priorität: **29.06.93 DE 4321533**

(43) Veröffentlichungstag der Anmeldung: **04.01.95 Patentblatt 95/01**

(84) Benannte Vertragsstaaten: **AT BE CH DE DK ES FR GB GR IT LI NL PT SE**

(71) Anmelder: **Herberts Gesellschaft mit beschränkter Haftung Christbusch 25 D-42285 Wuppertal (DE)**

(72) Erfinder: **Becker, Heinz Dietholf Ulrich-Haberland-Strasse 28 D-53121 Bonn (DE)**
Erfinder: **Bederke, Klaus, Dr. Oststrasse 36 D-45549 Sprockhövel (DE)**
Erfinder: **Bremer, Gerhard, Dr. An der Waidmaar 68 D-50226 Frechen (DE)**
Erfinder: **Kerber, Herrmann Daniel-Schürmann-Weg 37 D-42369 Wuppertal (DE)**
Erfinder: **Precht, Birgit Bonnerstrasse 256 D-50968 Köln (DE)**
Erfinder: **Sadowski, Fritz, Dr. Am Mühlenacker 35 D-50259 Brauweiler (DE)**
Erfinder: **Stephan, Werner Westfalenweg 169 D-42111 Wuppertal (DE)**

(74) Vertreter: **Türk, Gille, Hrabal, Leifert Brucknerstrasse 20 D-40593 Düsseldorf (DE)**

(54) **Bindemittel- und Überzugsmittelzusammensetzung, deren Herstellung und Verwendung.**

(57) Beschrieben wird eine für Überzugsmittel geeignete Bindemittelzusammensetzung, die einen oder mehrere ungesättigte Polyester mit einer Säurezahl von 5 - 60 mg KOH/g einer Hydroxylzahl von 50 - 200 mg KOH/g, einem Molekulargewichtsmittel (Mw) von 500 bis 3000 g/mol, und mit einem Gehalt von 0,8 bis 1,2 ethylenischen Doppelbindung pro 100 g Polyester, erhältlich durch Umsetzung

A) einer oder mehrerer alpha,beta-ethylenisch ungesättigter Dicarbonsäuren oder deren Anhydriden,

B) einem oder mehreren hydroxyfunktionellen Allylethern, ohne Zusatz andere Polyole und

C) einer oder mehreren ethylenisch ungesättigten Verbindungen mit einer Oxirangruppe im Molekül,

im Molverhältnis von A) : B) : C) = (2 bis 4) : (2 bis 4) : (0,5 bis 1,8). Die Zusammensetzung ist insbesondere für auch bei tiefen Temperaturen rasch trocknende Spachtel- und Füllermassen geeignet.

Die Erfindung betrifft eine Bindemittelzusammensetzung, die insbesondere zur Herstellung radikalisch härtender und oxidativ trocknender Überzugsmittel, insbesondere für Spachtelmassen und Füllermassen zur Ausbesserung von schadhaften Karosserieteilen und in der Autoserienlackierung geeignet ist. Die Bindemittelzusammensetzung basiert auf ungesättigten Polyestern, die mit Reaktivverdünnern zu Überzugsmitteln formuliert werden können.

Die EP-A-0 154 924 beschreibt ungesättigte Polyesterharze aus kondensierten Einheiten von alpha,beta-ethylenisch ungesättigten Dicarbonsäuren oder deren Anhydriden, gegebenenfalls weiterer Dicarbonsäuren oder deren Anhydriden, aliphatischen Diolen und Trimethylolpropandiallylether. Diese Polyesterharze können zusammen mit Styrol zu Überzugsmitteln formuliert werden. Styrol hat sich jedoch in den letzten Jahren als toxisch erwiesen; die Bestrebungen gehen dahin, styrolfreie Überzugsmittel bereitzustellen. Im Rahmen der vorliegenden Erfindung hat es sich gezeigt, daß der Ersatz von Styrol in diesen bekannten Überzugsmitteln durch andere Reaktivverdünner zu keinen Überzugsmitteln führt, die den Anforderungen einer klebefreien Aushärtung in kurzer Zeit genügen.

Die DE-A-39 38 149 beschreibt Bindemittel für Beschichtungsstoffe aus Fettsäureestern, z.B. Ölen und Maleinsäureanhydrid, die in einer substituierenden Diels-Alder-Reaktion umgesetzt werden. Danach werden hydroxyfunktionelle vinylisch oder allylisch ungesättigte Verbindungen an die Anhydrid-Gruppe addiert; zusätzlich kann das Reaktionsprodukt mit einem Glycidylester einer ungesättigten Fettsäure umgesetzt werden. Die Praxis hat jedoch gezeigt, daß diese Arbeitsweise zu einer Gelierung führt, und brauchbare Überzugsmittel nicht erhalten werden.

Aufgabe der vorliegenden Erfindung war es, Bindemittel für radikalisch härtende und oxidativ trocknende Überzugsmittel bereitzustellen, die bereits bei Raumtemperatur (ca. 23 ° C) eine rasche Trocknung auch in dicken Schichten, eine gute Schleifbarkeit und eine gute Pigmentbenetzung bei guter Verarbeitbarkeit ergeben, obwohl sie frei von Styrol formuliert werden können. Derartige Bindemittelzusammensetzungen sollen insbesondere zur Herstellung von Spachtelmassen und Füllermassen geeignet sein.

Es hat sich gezeigt, daß diese Aufgabe durch die Verwendung von ungesättigten Polyesterharzen auf der Basis von alpha,beta-ethylenisch ungesättigten Dicarbonsäuren oder deren Anhydriden, hydroxyfunktionellen Allylethern und alpha,beta-ethylenisch ungesättigten Verbindungen mit einer Oxiran-Gruppe im Molekül gelöst werden kann.

Einen Gegenstand der Erfindung bilden daher für Überzugsmittel geeignete Bindemittelzusammensetzungen, die einen oder mehrere ethylenisch ungesättigte Polyester enthalten, die erhältlich sind durch Kondensation und Addition von

A) einer oder mehreren alpha,beta-ethylenisch ungesättigten Dicarbonsäuren oder deren Anhydriden,

B) einem oder mehreren hydroxyfunktionellen Allylethern, und

C) einer oder mehreren ethylenisch ungesättigten Verbindungen mit einer Oxirangruppe im Molekül,

wobei die Kondensation im Molverhältnis von A) : B) : C) = (2 bis 4) : (2 bis 4) : (0,5 bis 1,8) erfolgt.

Die Bindemittelzusammensetzungen können frei von Lösemitteln sein, sie können auch gegebenenfalls ein oder mehrere organische Lösemittel enthalten. Bevorzugt sind die Bindemittelzusammensetzungen bei Raumtemperatur, z.B. bei 23 ° C flüssig.

Die in den erfindungsgemäßen Bindemittelzusammensetzungen enthaltenen ethylenisch ungesättigten Polyester haben eine Säurezahl von 5 - 60 mg KOH/g, eine Hydroxylzahl von 50 - 200 mg KOH/g und ein Molekulargewichtsmittel (Mw) von 500 bis 3000 g/mol, z.B. gemessen durch Gelpermeationschromatographie (Polystyrol-Standard). Ihr Gehalt an ethylenischen Doppelbindungen liegt bei 0,8 bis 1,2 pro 100 g Polyester.

Bei der Herstellung der ungesättigten Polyester kann als Komponente A) beispielsweise Maleinsäure, Maleinsäureanhydrid, Fumarsäure, Itaconsäure, Citraconsäure und/oder Mesaconsäure eingesetzt werden. Bevorzugt wird Maleinsäureanhydrid verwendet.

Als Komponente B) werden beispielsweise mit Allylalkohol partiell veretherte Diole und/oder Polyole eingesetzt. Als Diole und Polyole kommen beispielsweise geradkettige oder verzweigte aliphatische Di- und Polyole in Betracht. Es sind dies bevorzugt definierte monomere Verbindungen. Die Polyole enthalten z.B. 3 bis 6 OH-Gruppen, bevorzugt 3 bis 5. Beispiele für die Komponente B) sind: Trimethylolethanmonoallylether, Trimethylolethandiallylether, Trimethylolpropanmonoallylether, Trimethylolpropandiallylether, Pentaerythritmonoallylether, Pentaerythritdiallylether, Pentaerythrittriallylether, Glycerinmonoallylether. Bevorzugt werden Trimethylolpropanmonoallylether und Trimethylolpropandiallylether eingesetzt. Außer den hydroxyfunktionellen Allylethern werden bei der Herstellung der Polyester erfindungsgemäß keine weiteren Polyole eingesetzt.

Als Komponente C) können beispielsweise Glycidylester ungesättigter Säuren, z.B. Glycidylester ungesättigter Monocarbonsäuren, wie z.B. Glycidylacrylat, Glycidylmethacrylat, Undecensäureglycidylester und Dimethylacrylsäureglycidylester, sowie Glycidylester ungesättigter Monocarbonsäuren oder Monoglycidylester ungesättigter Dicarbonsäuremonoalkylester, wie z.B. Maleinsäuremonoalkylglycidylester, Itaconsäuremonoalkylglycidylester, Citraconsäuremonoalkylglycidylester und Mesaconsäuremonoalkylglycidylester eingesetzt werden. Weitere Beispiele sind Umsetzungsprodukte aus Diepoxiden und ethylenisch ungesättigten Monocarbonsäuren oder Dicarbonsäuremonoalkylestern, z.B. Umsetzungsprodukte aus Diepoxiden und (Meth)acrylsäure im molaren Verhältnis von 1 : 1; weitere Beispiele sind Allylglycidylether und Vinylglycidylether. Es handelt sich insbesondere um definierte monomere Verbindungen. Bevorzugt wird Glycidylmethacrylat verwendet.

Die Herstellung der erfindungsgemäß zu verwendenden ungesättigten Polyester kann nach bekannten Methoden, z.B. durch Schmelz- oder Azeotrop-Veresterung der Alkohole und Säuren oder deren veresterungsfähigen Derivate erfolgen; Beispiele für solche Methoden sind in "Methoden der organischen Chemie" (Houben-Weyl), 4. Auflage, Band 14/2, Georg Thieme Verlag, Stuttgart 1961, Seiten 1 - 5, 21 - 33, 40 - 44 beschrieben.

Zweckmäßigerweise wird gemäß einer bevorzugten Ausführungsform der erfindungsgemäß zu verwendende ungesättigte Polyester in zwei Stufen hergestellt.

Dabei erfolgt in einer ersten Stufe eine Kondensation, bevorzugt eine Schmelzkondensation der Komponenten A) und B). Die Kondensation kann zweckmäßigerweise im Azeotropverfahren unter Verwendung von üblichen Schleppmitteln erfolgen; dabei wird das Reaktionswasser kontinuierlich entfernt.

Als Schleppmittel sind z.B. aromatische und aliphatische Kohlenwasserstoffe geeignet, wie z.B. Xylol, Toluol, Cyclohexan oder Heptan. Beispielsweise wird bei Temperaturen von 100 - 180°C, vorzugsweise bei 120 - 150°C gearbeitet. Bevorzugt kondensiert man bis auf eine Säurezahl von 80 - 120, besonders bevorzugt 110 mg KOH/g.

In einer zweiten Stufe wird dann die bei der bevorzugten Ausführungsform Komponente C) durch Addition eingeführt. Die Addition kann bei erhöhter Temperatur, z.B. von 70 bis 130°C, vorzugsweise von 80 bis 110°C erfolgen. Hierzu bedient man sich zweckmäßigerweise Katalysatoren, wie z.B. Triphenylphosphit. Die Addition erfolgt an die restlichen aus der ersten Verfahrensstufe noch verbliebenen Carboxylgruppen.

Die erfindungsgemäßen Bindemittelzusammensetzungen können insbesondere zu radikalisch härtenden und oxidativ trocknenden Überzugsmitteln formuliert werden, die ihrerseits einen Gegenstand der Erfindung bilden. Hierzu werden die den Bindemittelzusammensetzungen zugrundeliegenden ungesättigten Polyester mit einem oder mehreren Reaktivverdünnern, die bevorzugt frei von Styrol und Styrolderivaten sind, eingesetzt. Besonders geeignete Reaktivverdünner sind beispielsweise ethylenisch ungesättigte Monomere, insbesondere solche, die unter Trocknungs- oder Härtungsbedingungen (z.B. radikalisch) mit dem ungesättigten Polyester reagieren können. Beispiele für derartige Reaktivverdünner sind mono- oder polyfunktionelle Acrylate und Methacrylate, wie Dioldiacrylate und Trioltriacrylate und Vinylether. Spezielle Beispiele sind Hydroxyethyl(meth)acrylat, Hydroxypropyl(meth)acrylat, Butandiol-1,4-di(meth)acrylat, Butandiol-1,3-di-(meth)acrylat, Hexandiol-1,6-di(meth)acrylat, Dipropylenglykoldi(meth)arylat, Ethylenglykoldi(meth)acrylat, Neopentylglykoldi(meth)acrylat, Tetraethylenglykoldi(meth)acrylat, Trimethylolpropantri(meth)acrylat, Pentaerythrittri(meth)acrylat, Pentaerythrittetra-(meth)acrylat, Dicyclopentenyloxyethyl(meth)acrylat, Hydroxyethylvinylether, Hydroxybutylvinylether, Trimethylolpropandivinylether, Tetraethylenglykoldivinylether, Cyclohexandivinylether.

Der hier verwendete Ausdruck (meth)acryl soll acryl und/oder methacryl bedeuten.

Die vorstehenden Reaktivverdünner haben den Vorteil, daß sie atoxisch sind. Es hat sich gezeigt, daß die erfindungsgemäßen Bindemittelzusammensetzungen mit den vorstehenden Reaktivverdünnern zu rasch aushärtenden Überzugsmitteln formuliert werden können, die keinen Zusatz von Styrol oder Styrolderivaten bedürfen.

Die Reaktivverdünner werden in derartigen Mengen zugesetzt, daß die gewünschte Applikationsviskosität erzielt wird. Im allgemeinen liegt der Mengenanteil an Reaktivverdünner bei 8 bis 135 Gew.-Teilen pro 100 Gew.-Teile des Festkörpers der ungesättigten Polyester der Bindemittelzusammensetzung. Ein Vorteil der erfindungsgemäßen Überzugsmittel liegt darin, daß selbst bei Zusatz geringer Mengen Reaktivverdünner niedrige Viskositäten erzielt werden, die zur Applikation geeignet sind. Die zugesetzten Mengen hängen weitgehend von dem gewünschten Anwendungszweck ab. Sollen die erfindungsgemäß formulierten Überzugsmittel beispielsweise als Spachtelmassen eingesetzt werden, so werden vorteilhaft pro 100 Gew.-Teile des ungesättigten Polyesters 8 bis 65 und bevorzugt 8 bis 45 Gew.-Teile eines oder mehrerer Reaktivverdünner verwendet. Sollen die erfindungsgemäßen Überzugsmittel als Füllermassen (beispielsweise für die Mehrschichtlackierung) formuliert werden, so werden bevorzugt höhere Anteile an Reaktivverdünner, beispielsweise 50 bis 130 Gew.-Teile, bevorzugt 65 bis 115 Gew.-Teile Reaktivverdünner auf 100 Gew.-Teile ungesättigten Polyester verwendet. Dies ergibt sich beispielsweise aus den unterschiedlichen Auftragweisen. Während Spachtelmassen im allgemeinen höher viskos sind und aufgerakelt werden, ist es günstig, Füllermassen niedriger viskos zu formulieren, um sie durch Spritzauftrag aufbringen zu können.

Den erfindungsgemäßen Überzugsmitteln können zur Einstellung der Viskosität gegebenenfalls auch ein oder mehrere organische Lösemittel zugesetzt werden. Derartige Lösemittel sind beispielsweise die in Lackformulierungen, Spachtelmassen und Füllermassen üblichen organischen Lösemittel, wie Ester, Alkohole und Ketone. Beispiele sind Ethylacetat und Butylacetat, Butanol und Benzylalkohol, sowie Acetylaceton (das auch als Beschleuniger dienen kann).

Im allgemeinen werden die Lösemittel bevorzugt in Mengen von nicht mehr als 5 Gew.-%, bezogen auf das fertige Überzugsmittel, eingesetzt, insbesondere wenn Spachtel- oder Füllermassen formuliert werden sollen. Es kann jedoch auch Wasser als Verdünnungsmittel verwendet werden. In diesem Falle ist es bevorzugt, wenn die Bindemittel eine hohe Säurezahl, beispielsweise von 30 bis 60, bevorzugt von 30 bis 50 aufweisen. Sie werden bevorzugt mit einer für Überzugsmittelzwecke üblichen Base, wie Ammoniak oder einem Amin, teilweise oder vollständig neutralisiert.

Für die Herstellung der Überzugsmittel, insbesondere Spachtelmassen, die die erfindungsgemäß zu verwendenden ungesättigten Polyesterharze enthalten, werden Pigmente und/oder Füllstoffe verwendet. Diese Materialien werden beispielsweise in Mengen von 30 bis 80 Gew.-%, bezogen auf das fertiggestellte Überzugsmittel. Es können für Überzugsmittel geeignete übliche organische und anorganische Pigmente und Füllstoffe verwendet werden. Beispiele für in Spachtelmassen und Füllermassen bevorzugt eingesetzte Pigmente sind anorganische Pigmente, wie Eisenoxidpigmente und Titandioxid. Beispiele für in derartigen Massen bevorzugt eingesetzte Füllstoffe sind insbesondere anorganische Füllstoffe, wie verschiedene Talkumarten, Schwerspat, Siliciumdioxide, Magnesiumaluminiumsilikate.

Zur Herstellung der erfindungsgemäßen Mittel, z.B. Spachtelmassen oder Füllermassen, können alle üblichen Mischaggregate, wie Dissolver, Planetmischer, Zwangskneter, Butterfly-Mischer, verwendet werden. Die Bestandteile werden darin beliebig vermischt.

Die Aushärtung der erfindungsgemäßen ungesättigten Polyesterharze in den Überzugsmitteln erfolgt über einen radikalischen Härtungsmechanismus, beispielsweise durch Zusatz von Initiatoren, wie Peroxiden, gegebenenfalls in Verbindung mit üblichen Beschleunigern, z.B. Metallsalzen und gegebenenfalls Katalysatoren, die auch in den erfindungsgemäß ungesättigten Polyester einkondensiert werden können.

Als Peroxide können z.B. die üblichen Radikalinitiatoren verwendet werden. Bevorzugte Peroxide sind tert. Butylhydroperoxid, Pinanhydroperoxid, Cumolhydroperoxid, 2,5-Dimethylhexan-2,5-di-hydro-peroxid, Cyclohexanonhydroperoxid, Methylethylketonhydroperoxid, 1-Oxy-1'-hydro-peroxydicyclohexylperoxid und Diisopropylbenzolmonohydroperoxid. Besonders bevorzugt werden die Peroxide in Mengen von 1 bis 1,5 Gew.-%, bezogen auf die gesamte Überzugsmittelmasse zugesetzt. Die Peroxide können auch in phlegmatisierter Form eingesetzt werden. Ein Beispiel für ein übliches Phlegmatisierungsmittel sind Phthalsäureester. Beim Einsatz in phlegmatisierter Form werden im allgemeinen 2 bis 3 Gew.-% des phlegmatisierten Peroxids verwendet.

Als Beschleuniger dienen für Radikalreaktionen übliche Beschleuniger, wie z.B. insbesondere Metallsalze, wie z.B. Cobalt- und Mangansalze von Säuren - wie Leinölfettsäuren, Tallölfettsäuren, Sojafettsäuren- von Harzsäuren - wie Abietinsäuren und Naphthensäuren - von Essigsäuren oder Isooctansäure. Die Beschleuniger werden in üblichen Mengen, beispielswei-se bis zu 1 Gew.-%, z.B. 0,01 bis 1 Gew.-%, bezogen auf das Gesamtgewicht des Überzugsmittels, verwendet.

Katalysatoren sind für Radikalreaktionen übliche Katalysatoren. Bevorzugt verwendet werden aromatische Amine wie N,N-Dimethylanilin, N,N-Diethyl-anilin, N,N-Dimethyl-p-toluidin, Oxyethylanilin, N,N-Di-(2-hydroxyethyl)-anilin, 4-Dimethylaminobenzoesäure, 4-Diethylaminobenzoesäure oder CH-acide Verbindung, wie Acetylaceton, Acetessigester, 5,5-Dimethyldihydro-resorcin. Die Katalysatoren aktivieren die Zersetzung mit Metallsalzen und damit indirekt die Aktivierung der Peroxide. Sie können beispielsweise in Mengen von 0 bis 2 Gew.-%, bezogen auf die Masse des Überzugsmittels, eingesetzt werden.

Der Katalysator kann auch so geartet sein, daß er sowohl eine CH-acide als auch eine alpha,beta-ethylenisch ungesättigte Verbindung enthält, wie z.B. Acetylacetoxyethyl(meth)acrylat. Er kann dann in den ungesättigten Polyester eingebaut werden.

Beispiele für lacKübliche Hilfsstoffe, die den erfindungsgemäßen Überzugsmitteln zugesetzt werden können, sind Thixotropiermittel, Antiabsetzmittel, Entgasungsmittel, Verlaufsmittel, Haftharze und übliche Stabilisatoren. Zur Stabilisierung der erfindungsgemäßen ungesättigten Polyester können den erfindungsgemäßen Überzugsmitteln als Hilfsstoffe übliche Polymerisationsinhibitoren oder Antioxidantien zugesetzt werden, z.B. Hydrochinon, Resorcin, Hydrochinonmonomethylether, Phenothiazin, p-tert. Butylbrenzkatechin, 2,6-Di-tert.-butyl-p-kresol, p-Benzochinon. Die zugesetzten Mengen liegen z.B. bei 10 bis 1000 ppm, bezogen auf das fertige Überzugsmittel.

Eine bevorzugte Ausführungsform der Erfindung betrifft Überzugsmittel, die enthalten:

I. 20 bis 60 Gew.-% des Gemisches aus Bindemittelzusammensetzung und Reaktivverdünner, wobei bei Spachtelmassen 25 bis 35 Gew.-% und bei Füllermassen 40 bis 55 Gew.-% bevorzugt sind,

II. 30 bis 80 Gew.-% eines oder mehrerer farbgebender Pigmente und/oder Füllstoffe, wobei bei Spachtelmassen bevorzugt 50 bis 80 Gew.-% und bei Füllermassen bevorzugt 30 bis 50 Gew.-% vorliegen.

III. 1 bis 5 Gew.-% eines oder mehrerer Initiatoren, z.B. Peroxide,

IV. 0 bis 1 Gew.-% eines oder mehrerer Beschleuniger,

V. 0 bis 2 Gew.-% eines oder mehrerer Katalysatoren,

VI. 0 bis 5 Gew.-% eines oder mehrerer organischer Lösemittel und

VII. gegebenenfalls ein oder mehrere lackübliche Additive.

Die erfindungsgemäßen Überzugsmittelzusammensetzungen werden vorteilhaft so bereitgestellt, daß sie zunächst keine Peroxide enthalten. Die Peroxide werden bevorzugt unmittelbar vor der Anwendung zugesetzt. Aktivatoren, Beschleuniger und Katalysatoren können bereits in den Überzugsmittelmassen vor Zusatz des Peroxids enthalten sein.

Die erfindungsgemäßen Überzugsmittel sind insbesondere als Spachtelmassen und Füllermassen geeignet.

Sie ergeben selbst bei Raumtemperatur (ca. 23°C) eine schnelle Trocknung, auch in dicken Schichten, z.B. bis zu 1000 $\mu$m, eine gute und rasche Schleifbarkeit, eine gute Pigmentbenetzung zur Aufnahme farbgebender Pigmente und/oder Füllstoffe, sowie eine gute Verarbeitbarkeit.

Die Applikation der erfindungsgemäßen Überzugsmittel kann in üblicher Weise erfolgen. Sie richtet sich nach dem Anwendungszweck bzw. der Viskosität der eingesetzten Masse. So können höherviskose Massen, wie Spachtelmassen beispielsweise durch Aufstreichen bzw. Rakeln aufgebracht werden. Niedrigerviskose Massen, wie z.B. Füllermassen, können durch Streichen, jedoch auch durch Spritzauftrag appliziert werden.

Die Schichtdicken können sehr hoch sein, beispielsweise liegen sie bei Verwendung als Füller in der Größenordnung bis zu 1000 $\mu$m, bei der Verwendung als Spachtelmassen in der Größenordnung bis zu 5000 $\mu$m.

Die Härtung der applizierten erfindungsgemäßen Überzugsmittel kann oxidativ und radikalisch erfolgen. Im allgemeinen werden Radikalinitiatoren, soweit erforderlich und erwünscht, Beschleuniger und Katalysatoren, soweit jeweils erforderlich und erwünscht, zugemischt, worauf eine Aushärtung bei sehr kurzen Reaktionszeiten, beispielsweise von 5 bis 10 Minuten, erfolgt. Selbst bei diesen kurzen Reaktionszeiten kann auch bei tiefen Temperaturen von beispielsweise bis zu -5°C oder bis zu -10°C ausgehärtet werden. Im Prinzip ist es auch möglich die erfindungsgemäßen Überzugsmittel durch aktinisches Licht, beispielsweise durch UV-Licht zu härten. Hierzu ist es möglich, den Überzugsmitteln übliche Photoinitiatoren zuzusetzen. In diesem Falle ist es möglich auf den Zusatz von Radikalinitiatoren zu verzichten. Die Photoinitiatoren können beispielsweise in Mengen bis zu 5 Gew.-%, beispielsweise von 1 bis 5 Gew.-%, bezogen auf das Überzugsmittel, zugesetzt werden.

Als Photoinitiatoren kommen die auf dem Lacksektor üblichen Photoinitiatoren beispielsweise in Betracht. Beispiele für Photoinitiatoren sind solche, die beispielsweise im Wellenlängenbereich von 190 bis 400 nm absorbieren.

Geeignet sind beispielsweise Azoinitiatoren, z.B. das Azobisisobutyronitril. Weitere Beispiele für Photoinitiatoren sind chlorhaltige Initiatoren, wie chlorhaltige aromatische Verbindungen, z.B. beschrieben in US-A-4 089 815; aromatische Ketone, wie in US-A-4 318 791 oder EP-A-0 003 002 und EP-A-0 161 463 beschrieben; Hydroxyalkylphenone, wie in US-A-4 347 111 beschrieben; Phosphinoxide, wie in EP-A-0 007 086, 0 007 508 und 0 304 783 beschrieben; Initiatoren auf der Basis von Hydroxyalkylphenonen, wie in US-A-4 602 097 beschrieben, ungesättigte Initiatoren, wie OH-funktionelle aromatische Verbindungen, die beispielsweise mit Acrylsäure verestert wurden, wie in US-A-3 929 490, EP-A-0 143 201 und 0 341 560 beschrieben; oder Kombinationen derartiger Initiatoren, wie beispielsweise in US-A-4 017 652 beschrieben. Es können auch Photoinitiatoren vom Acrylphosphanoxidtyp und vom Bis-acrylphosphanoxidtyp verwendet werden, wie sie beispielsweise in EP-A-0 413 657 beschrieben sind. Sie sind, gegebenenfalls in Kombinationen mit anderen Photoinitiatoren, wie beispielsweise vom Hydroxyalkylphenontyp, besonders für farbige Beschichtungen geeignet, die transparent bis deckend pigmentiert sind. Ein bevorzugtes Beispiel für Photoinitiatoren vom Hydroxyalkylphenontyp ist 1-Hydroxy-2-methyl-1-phenyl-propan-2-on.

Die erfindungsgemäßen Überzugsmittel werden beispielsweise als Spachtelmessen oder Füllermassen auf verschiedenste Substrate, insbesondere bei der Herstellung von Mehrschichtlackierungen appliziert. Verwendbare Substrate sind beispielsweise metallische Substrate oder mit einem oder mehreren Überzügen versehene metallische Substrate. Es sind jedoch auch Kunststoffsubstrate zur Beschichtung geeignet. Die erfindungsgemäßen Überzugsmittel sind besonders zur Reparatur- und Serienlackierung, insbesondere von Mehrschichtaufbauten z.B. auf dem Kraftfahrzeugsektor geeignet.

Die folgenden Beispiele dienen zur Erläuterung der Erfindung. Teile und Prozentangaben beziehen sich, sofern nicht anders angegeben, auf das Gewicht.

Tabelle 1

| (Übersicht über die Herstellung der ungesättigten Polyester): | | | | |
|---|---|---|---|---|
| Rohstoff: | Komponente: | Herstellungsbeispiel: | | |
| | | 1 | 2 | 3 |
| Maleinsäureanhydrid | A | 2,81 | 3,01 | 3,10 |
| Trimethylolpropanmonoallylether | B | 1,57 | 3,07 | 3,07 |
| Trimethylolpropandiallylether | B | 1,28 | - | - |
| Glycidylmethacrylat | C | 1,25 | 1,32 | 1,27 |
| Säurezahl: | | 15 | 15 | 50 |
| Hydroxylzahl: | | 65 | 152 | 140 |

Herstellungsbeispiel 1:

In einen mit einem Rührer, Wasserabscheider und Rückflußkühler versehenen 2-Liter-Dreihalskolben werden 276,2 g (2,81 Mol) Maleinsäureanhydrid, 273,2 g (1,57 Mol) Trimethylolpropanmonoallylether, 373,9 g (1,28 Mol) Trimethylolpropandiallylether und 100 ppm Phenothiazin unter einem schwachen Stickstoff-Strom auf 90°C erhitzt. Nach 2 Stunden werden 30 g Heptan als Schleppmittel zugegeben und bei einer Temperatur von 150 - 170°C bis auf eine Säurezahl von 100 azeotrop verestert. Dann wird das Schleppmittel im Vakuum entfernt. Nach Abkühlen auf 90°C werden 100 ppm Phenothiazin und 0,8 g Benzyltrimethylammoniumchlorid zugesetzt und dann 180,3 g (1,27 Mol) Glycidylmethacrylat so zudosiert, daß die Temperatur 90°C nicht überschreitet. Der erfindungsgemäße ungesättigte Polyester wird so lange bei der Temperatur von 90°C gehalten, bis eine Säurezahl von 15 erreicht ist. Das erhaltene Produkt hat dann eine Viskosität von 3830 mPas.

Herstellungsbeispiel 2:

In einem mit einem Rührer, Wasserabscheider und Rückflußkühler versehenen 2-Liter-Dreihalskolben werden 295,0 g (3,01 Mol) Maleinsäureanhydrid, 534,2 g (3,07 Mol) Trimethylolpropanmonoallylether und 100 ppm Phenothiazin unter einem schwachen Stickstoff-Strom auf 90°C erhitzt. Nach 2 Stunden werden 30 g Heptan als Schleppmittel zugegeben und bei einer Temperatur von 150 - 170°C bis auf eine Säurezahl von etwa 100 azeotrop verestert. Dann wird das Schleppmittel im Vakuum entfernt. Nach Abkühlen auf 90°C werden 100 ppm Phenothiazin und 0,8 g Benzyltrimethylammoniumchlorid zugesetzt und dann 187,4 g (1,32 Mol) Glycidylmethacrylat so zudosiert, daß die Temperatur 90°C nicht überschreitet. Der erfindungsgemäße ungesättigte Polyester wird so lange bei der Temperatur von 90°C gehalten, bis eine Säurezahl von 15 erreicht ist. Der auf diese Weise erhaltene ungesättigte Polyester wird mit 10 % Dipropylenglykoldiacrylat auf eine Viskosität von 7990 mPas. eingestellt.

Herstellungsbeispiel 3:

In einem mit einem Rührer, Wasserabscheider und Rückflußkühler versehenen 2-Liter-Dreihalskolben werden 303,8 g (3,10 Mol) Maleinsäureanhydrid, 534,2 g (3,07 Mol) Trimethylolpropanmonoallylether, 100 ppm Phenothiazin unter einem schwachen Stickstoff-Strom auf 90°C erhitzt. Nach 2 Stunden werden 30 g Heptanmittel zugegeben und bei einer Temperatur von 150 - 170°C bis auf eine Säurezahl von etwa 100 azeotrop verestert. Dann wird das Schleppmittel im Vakuum entfernt. Nach Abkühlen auf 90°C werden 100 ppm Phenothiazin und 0,8 g Benzyltrimethylammoniumchlorid zugesetzt und dann 1,27 Mol Glycidylmethacrylat so zudosiert, daß die Temperatur 90°C nicht überschreitet. Der erfindungsgemäße ungesättigte Polyester wird so lange bei der Temperatur von 90°C gehalten, bis eine Säurezahl von 50 erreiht ist. Anschließend werden 80 % der verfügbaren Carboxyl-Gruppen mit Diethylamin neutralisiert, und der auf diese Weise erhaltene ungesättigte Polyester wird mit deionisiertem Wasser auf eine Viskosität von ca.

4000 mPas. eingestellt.

Vergleichsversuch:

Es wurde ein ungesättigter Polyester gemäß Beispiel 3 der EP-A-0 154 924 wie folgt hergestellt:
In einen mit einem Rührer, Wasserabscheider und Rückflußkühler ausgestattetem 2-Liter-Dreihalskolben werden 2,70 Mol Maleinsäureanhydrid, 0,30 Mol Phthalsäureanhydrid, 1,35 Mol Propandiol-1,2, 0,60 Mol Diethylenglykol, 3,00 Mol Trimethylolpropandiallylether und 0,2 g p-Benzochinon eingewogen und unter einem Stickstoffstrom einer Schmelzkondensation unterworfen, bis eine Säurezahl von 36,2 erreicht ist. Der Polyester hat eine Viskosität von 5700 mPa.s.

Herstellungsbeispiel 4: (Herstellung einer Spachtelmasse)

In einen sauberen Behälter werden 30,2 Gew.-Teile des erfindungsgemäßen Polyesters Beispiel 2, 1,10 Gew.-Teile einer 1 %igen Hydrochinon-Lösung in Xylol und 0,6 Gew.-Teile eines organischen Thixotropierungsmittels eingewogen und mit dem Dissolver (16 m/sec.) verrührt. Dann werden 0,3 Gew.-Teile pyrogenes Siliciumdioxid hinzugefügt und nochmals 5 min. lang gerührt. Dann werden unter laufendem Dissolver 0,05 Gew.-Teile Eisenoxidgelb, 3,0 Gew.-Teile Titandioxid, 26,4 Gew.-Teile Talkum einer Teilchen-größe von ca. 4 $\mu$m, 5,5 Gew.-Teile Schwerspat und 26,4 Gew.-Teile Talkum einer Teilchengröße von ca. 1 $\mu$m zugegeben. Durch Erhöhung der Rührgeschwindigkeit auf 18 -21 m/sec. wird die Temperatur auf etwa 55 - 60°C erhöht. Nach einer Abkühlphase auf 40°C werden per Hand 5,75 Gew.-Teile Dipropylenglykoldiacrylat und 0,7 Gew.-Teile einer 10 %igen Cobaltoctoat-Lösung in Ethylacetat untergerührt.

Herstellungsbeispiel 5: (Herstellung einer Füllermasse)

In einen sauberen Behälter werden 30,0 Gew.-Teile des erfindungsgemäßen Polyesters von Herstellungsbeispiel 2, 1,6 Gew.-Teile einer 1 %igen Hydrochinon-Lösung in Xylol und 0,6 Gew.-Teile eines organischen Thixotropierungsmittels eingewogen und mit dem Dissolver (16 m/sec.) verrührt. Dann werden 0,5 Gew.-Teile pyrogenes Siliciumdioxid hinzugefügt und nochmals 5 min. lang gerührt. Es werden noch 18,5 Gew.-Teile Dipropylenglykoldiacrylat eingewogen. Dann werden unter laufendem Dissolver 0,2 Gew.-Teile Eisenoxidgelb, 0,2 Gew.-Teile Eisenoxidrot, 3,0 Gew.-Teile Titandioxid, 33,3 Gew.-Teile Talkum einer Teilchengröße von ca. 4 $\mu$m zugegeben. Durch Erhöhung der Rührgeschwindigkeit auf 18 - 21 m/sec. wird die Temperatur auf etwa 55 - 60°C erhöht. Nach einer Abkühlphase auf 40°C werden per Hand 6 Gew.-Teile Dipropylenglykoldiacrylat und 1,5 Gew.-Teile einer 10 %igen Cobaltoctoat-Lösung in Ethylacetat untergerührt.

Beurteilung der Eigenschaften:

Die Spachtel- und Füllermassen von Beispiel 4 und 5 wurden vor der Verarbeitung mit 3 Gew.-% Methylethylketon-Peroxid (50 % phlegmatisiert) versetzt, homogen verrührt und in einer Schichtdicke von 20 bis 800 $\mu$m für Füllermassen und von 20 bis 2000 $\mu$m für Spachtelmassen auf geschliffenes Eisenblech aufgetragen.

|  | erfindungsgemäße Beispiele: | Vergleichs- beispiel: |
|---|---|---|
| **Füllermasse** | | |
| Potlife mit 3 % Peroxid | 45 bis 60 min. | 40 min. |
| Ablaufsicherheit | 2 | 3 - 4 |
| Trocknung bei 20°C nach | | |
| 4 Stunden | 2 | 3 |
| Oberflächenkleber (nach 4 Std.) | 2 | 3 |
| Schleifbarkeit nach | | |
| Trocknung über Nacht (120er Papier) | | |
| Zusetzen des Schleifpapiers | 1 | 2 |
| Überarbeitbarkeit mit | | |
| Lackieraufbau, Ofentrocknung | i.O. | n.i.O. |
| Feucht/Warm-Test nach DIN | | |

| | | |
|---|---|---|
| 50017 KK | 2 | 3 |
| | (i.O.) | (n.i.O.) |

<u>Spachtelmasse</u>

| | | |
|---|---|---|
| Potlife mit 3 % Peroxid | 10 - 15 min. | 6 - 10 min. |
| Trocknung bei 20°C nach 2,5 Stunden | 2 | 2 - 3 |
| Oberflächenkleber (nach 2,5 h) | 2 | 3 |
| Schleifbarkeit, trocken von Hand, 80er Papier, Zusetzen des Schleifpapiers | 1 | 2 |

<u>Erläuterungen zu:</u>

1) Ablaufsicherheit:
   1 = keine Ablaufneigung
   2 = geringe Ablaufneigung
   3 = deutliche Ablaufneigung
   4 = starke Ablaufneigung
2) Trocknung/Oberflächenkleber:
   1 = klebfrei
   2 = leichter Kleber
   3 = deutlicher Kleber
   4 = stark klebrig
3) Schleifbarkeit (Zusetzen des Schleifpapiers)
   1 = kein Zusetzen
   2 = Zusetzen

Füller und Spachtel, deren Prüfergebnisse mit gleich größer 3 bewertet werden, sind für den praktischen Einsatz nicht geeignet.

**Patentansprüche**

1. Für Überzugsmittel geeignete Bindemittelzusammensetzung, enthaltend einen oder mehrere ungesättigte Polyester mit einer Säurezahl von 5 - 60 mg KOH/ g einer Hydroxylzahl von 50 - 200 mg KOH/g, einem Molekulargewichtsmittel (Mw) von 500 bis 3000 g/mol, und mit einem Gehalt von 0,8 bis 1,2 ethylenischen Doppelbindungen pro 100 g Polyester, erhältlich durch Umsetzung
   A) einer oder mehrerer alpha,beta-ethylenisch ungesättigter Dicarbonsäuren oder deren Anhydriden,
   B) einem oder mehreren hydroxyfunktionellen Allylethern, ohne Zusatz anderer Polyole und
   C) einer oder mehreren ethylenisch ungesättigten Verbindungen mit einer Oxirangruppe im Molekül,
   im Molverhältnis von A) : B) : C) = (2 bis 4) : (2 bis 4) : (0,5 bis 1,8).

2. Radikalisch härtendes und oxidativ trocknendes Überzugsmittel, enthaltend ein Gemisch aus
   100 Gew. -Teilen einer Bindemittelzusammensetzung nach Anspruch 1, wobei sich die Gew.-Teile auf den Festkörpergehalt an ungesättigtem Polyester beziehen und

8 bis 135 Gew.-Teile eines oder mehrerer Reaktivverdünner in der Form von einem oder mehreren flüssigen ethylenisch ungesättigten Monomeren.

3. Überzugsmittel nach Anspruch 2, enthaltend

I. 20 bis 60 Gew.-% des Gemisches aus Bindemittelzusammensetzung und Reaktivverdünner,

II. 30 bis 80 Gew.-% eines oder mehrerer farbgebender Pigmente und/oder Füllstoffe,

III. 1 bis 5 Gew.-% eines oder mehrerer Radikalinitiatoren,

IV. 0 bis 1 Gew.-% eines oder mehrerer Beschleuniger,

V. 0 bis 2 Gew.-% eines oder mehrerer Katalysatoren,

VI. 0 bis 5 Gew.-% eines oder mehrerer organischer Lösemittel und

VII. gegebenenfalls ein oder mehrere lacküblichen Additive.

4. Überzugsmittel nach einem der Ansprüche 2 und 3, in Form einer Spachtelmasse, mit einem Gehalt an Pigment und/oder Füllstoff (II) von 50 bis 80 Gew.-%.

5. Überzugsmittel nach einem der Ansprüche 2 und 3 in der Form einer für Mehrschichtlackierungen geeigneten Füllermasse, mit einem Gehalt an Pigment und/oder Füllstoff (II) von 30 bis 50 Gew.-%.

6. Verfahren zur Herstellung der Bindemittelzusammensetzung nach Anspruch 1, dadurch gekennzeichnet, daß man die in Anspruch 1 definierten Komponenten A) und B) in einer ersten Stufe einer Kondensationsreaktion unterzieht und in einer zweiten Stufe die in Anspruch 1 definierte Komponente C) addiert.

7. Verfahren nach Anspruch 6, dadurch gekennzeichnet, daß man die Kondensation der Komponenten A) und B) unter azeotroper Entfernung von Reaktionswasser oder in der Schmelze durchführt.

8. Verfahren zur Herstellung der Überzugsmittel nach einem der Ansprüche 2 bis 5, dadurch gekennzeichnet, daß man die gemäß Anspruch 6 oder 7 erhaltene Bindemittelzusammensetzung mit einem oder mehreren Reaktivverdünnern im Verhältnis 100 Gew.-Teile der Bindemittelzusammensetzung, bezogen auf deren Festkörpergehalt, zu 8 bis 135 Gew.-Teile Reaktivverdünner und mit den gewünschten Mengen an Pigmenten und/oder Füllstoffen, Peroxiden, Beschleunigern, Katalysatoren, Lösemitteln und gegebenenfalls lacküblichen Additiven vermischt.

9. Verwendung der Bindemittelzusammensetzungen nach Anspruch 1 zur Herstellung von Überzugsmitteln, insbesondere von Spachtelmassen und Füllermassen.

10. Verwendung der Überzugsmittel nach einem der Ansprüche 2 bis 5 als Spachtelmassen oder Füllermassen, insbesondere bei der Ausbesserung von Karossierteilen und in der Kraftfahrzeugserienlackierung.